Europäisches Patentamt

(19) European Patent Office

Office européen des brevets

(11) Publication number : **0 368 875 B1**

(12) # EUROPEAN PATENT SPECIFICATION

(45) Date of publication of patent specification :
22.04.92 Bulletin 92/17

(51) Int. Cl.⁵ : **A01J 7/00**

(21) Application number : **88905255.1**

(22) Date of filing : **01.06.88**

(86) International application number :
**PCT/SE88/00300**

(87) International publication number :
**WO 88/09613 15.12.88 Gazette 88/27**

(54) **METHOD AND ARRANGEMENT FOR MEMBRANE FILTRATION OF MILK IN CONNECTION WITH MILKING.**

(30) Priority : **05.06.87 SE 8702363**

(43) Date of publication of application :
**23.05.90 Bulletin 90/21**

(45) Publication of the grant of the patent :
**22.04.92 Bulletin 92/17**

(84) Designated Contracting States :
**DE FR GB**

(73) Proprietor : **ALFA-LAVAL AGRICULTURE INTERNATIONAL AB**
**Farm Center P.O. Box 39**
**S-147 21 Tumba (SE)**

(72) Inventor : **LIDMAN, Magnus**
**Kärrhöksvägen 7**
**S-147 00 Tumba (SE)**

(74) Representative : **Lerwill, John**
**A.A. Thornton & Co. Northumberland House**
**303-306 High Holborn**
**London, WC1V 7LE (GB)**

## Description

The present invention relates to a method and an arrangement for membrane filtration of milk in connection with milking.

When cows are milked by means of milking machines the flow varies very strongly. The variation is caused partly by the construction of the milking plant and partly by the physiological properties of the cows.

Milking plants work with vacuum and the milk is transported through a pipe line system, which has a vacuum which is fairly constant, to a container usually called an end unit. From this container the milk is pumped, under atmospheric pressure, through a pipe line to a cooling tank or some other storage vessel.

When milk is subjected to membrane filtration in connection with the milking, a membrane filter is connected to the milking plant by way of a balance tank. From this tank the milk is pumped to a circulation path comprising the membrane filter, in which the milk is divided into two fractions, a concentrate and a permeate. Depending on the choice of filter media these fractions may have different compositions. If the milk is to be concentrated by way of ultrafiltration, the permeate consists of water, milk, sugar and low molecular salts. If the concentration takes place by way of reverse osmosis the permeate consists of water obtained from the milk.

The membrane filtration usually takes place in direct connection with the milking. After milking the milk has a temperature of about 35°C and considering the shelf life it is important that the time the milk is kept at this temperature is kept as short as possible.

The milk is transported from the end unit by way of a milk filter, in which coarser contaminations are separated off, to the balance tank and is from there jumped to the circulation path of the membrane filter.

When the milk in the balance tank falls to a certain predetermined level, the pump which transports the milk to the circulation path stops. At this time there is milk remaining in the end unit, in the pipe lines between this unit and the balance tank and in the balance tank.

The milking plant as well as the components which are included in the membrane filtration equipment must be cleaned after each milking. The milk which is left in the plant will be lost during the washing if no measures are taken and consequently represents a loss to the milk producer.

According to the invention it is therefore proposed that permeate obtained during the membrane filtration is used to displace milk from the end unit in the milking plant and from the pipe lines between the same and the membrane filter, when the milking is terminated.

Also in accordance with the invention is an arrangement for membrane filtration of milk in connection with milking, comprising a container (the so-called end unit), a balance tank for receiving milk from the container, pumps to transport the milk from the container and balance tank, a circulation path comprising a circulation pump and a membrane filter, and pipe lines for concentrate and permeate, characterised by a pipe line to return permeate to said container, and means for controlling the respective pumps.

According to the invention there is obtained an increased yield of milk concentrate. By displacing the milk by means of permeate, which is a product obtained from the milk, no oppositions can arise from a food technology point of view, especially since the permeate used for displacing the milk is according to the invention produced during the time of displacing the milk and has not been stored during the production phase. If ordinary tap water is used there is always a risk of contamination, especially in such an exposed environment as a milking stall.

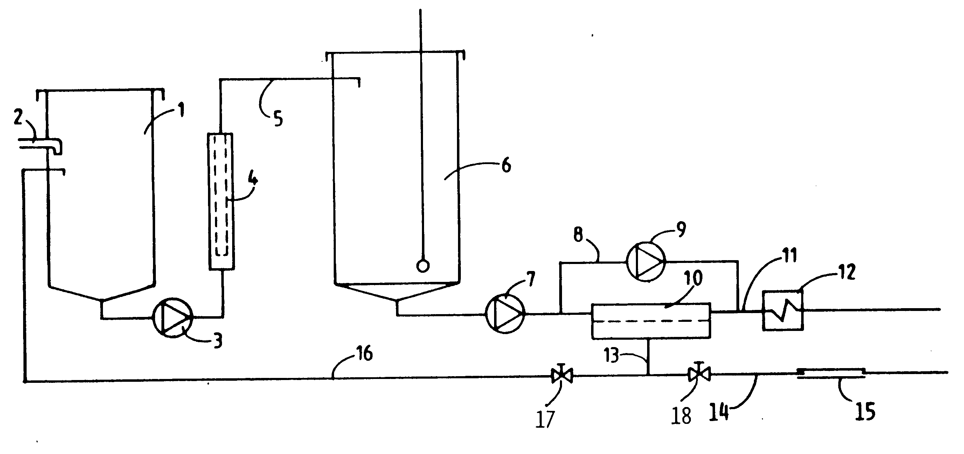

The method and the arrangement according to the invention are described further with reference to the attached drawing which shows an example of how membrane filtration equipment is connected to the end unit in a milking plant.

In the drawing there is shown an end unit 1 to which milk is transported under vacuum by way of a pipe line 2. From the end unit 1 the milk is transported by a pump 3 through a milk filter 4 in a pipe line 5 to a balance tank 6 provided with a level guard. From the balance tank 6 the milk is transported by a pump to a circulation path comprising a pump 9 and an ultra filter 10. A concentrate flow is led from the circulation path by way of a pipe 11, and is heat treated in a heat exchanger 12. From the heat exchanger the concentrate flow is conducted to a cooling tank not shown in the drawing. The permeate obtained from the ultra filter enters a pipe line 13, which during the time the milking takes place, is of connected to a pipe line 14 for transport of permeate. The pipe line 14, which e.g. may be connected to a system for distribution of liquid to the cows, is advantageously provided with a transparent section 15 arranged within sight of the person who milks the cows. With such an arrangement this person may easily see that the filter is operating correctly. If a leakage should occur the permeate will no longer be clear and will become cloudy with milk fat and proteins. This transparent section may of course be located at some other place in the permeate pipe line. Between the pipe line 13 and the balance tank 1 there is a pipe line 16, through which permeate may be returned to the balance tank 1. In the pipe line 16 there is a valve 17 and in the pipe line 14 a valve 18.

The method according to the invention is advantageously carried out in the following way. When the last group of cows has been milked the milker activates the programme for emptying the milk from the milking and membrane filtration equipment. The milk continues to flow from the balance tank 6 and is treated in the ultra filter until the milk in the balance tank falls below a certain level. The programme for emptying is then started.

In the first step of this programme the end unit 1 is emptied of milk by keeping the pump 3 in operation for about 15 seconds.

In the second step the milk is subject to ultrafiltration as described earlier and the concentrate is heat treated while the permeate is returned to the end unit 1 by way of the pipe line 16. When permeate has been transported to the end unit for 1-2 minutes, the pump 3 is operated for 10-15 seconds so that the milk remaining in the milk filter 4 and the pipe line 5 is displaced by the permeate. In the meantime the ultra filter continues working with milk being transported to it from the balance tank. When the balance tank 6 has been emptied of milk there is about 20 litres of permeate in the end unit 1 and about 10 litres of milk concentrate in the ultra filter 10 and its circulation path. The circulation pump 9 is then stopped and the pump 3 of the end unit jumps permeate to the balance tank 6. The pump 7 arranged after the balance tank 6 pumps the permeate to the ultrafilter and its circulation path in such a way that the milk concentrate is displaced and passes through the heat exchanger 12 to the cooling tank. When the pump 7 has transported about 10 litres of permeate it is stopped and the circulation pump 9 is started. This pump operates for about 2 minutes and rinses the filter surfaces with permeate. After this time period the circulation pump 9 is stopped and the pump 7 is started for the diluted milk now present in the ultra filter to be displaced by the permeate remaining in the balance tank.

The emptying method described above refers to ultrafiltration equipment in which the milk concentrate is heat treated. The method will be the same, although the times and volumes will be different, if the heat treatment unit 12 is omitted or is located prior to the filter immediately after the pump 7. The same also applies if the membrane filter consists of a membrane module for reverse osmosis.

During some parts of the emptying procedure the normal control of the pump 7 by the level in the balance tank 6 is interrupted. The pump 7 is then controlled by the control equipment of the ultra filter.

**Claims**

1. Method for membrane filtration of milk in connection with milking, wherein the milk is transported from milking to a container, and from this container is conducted by way of a balance tank to a circulation path including the membrane filter, characterised in that permeate from the membrane filtration is returned to said container for displacing milk from the container and from equipment arranged between this container and the circulation path when the milking is terminated.

2. Arrangement for membrane filtration of milk in connection with milking, comprising a container (1), a balance tank (6), for receiving milk from the container pumps (3, 7) for transporting the milk from the container and balance tank, a circulation path comprising a circulation pump (9) and a membrane filter (10), and pipe lines (11, 14) for concentrate and permeate, characterised by a pipe line (16) for returning permeate to the container (1) and means for controlling the pumps (3, 7, 9).

**Patentansprüche**

1. Verfahren zur Membranfiltration von Milch in Verbindung mit dem Melken, bei dem die Milch vom Melken zu einem Behälter transportiert und von diesem Behälter über einen Ausgleichstank zu einem Zirkulationsweg geleitet wird, der das Membranfilter einschließt, dadurch gekennzeichnet, daß Permeat von der Membranfiltration zu dem Behälter zurückgeführt wird zum Verdrängen von Milch aus dem Behälter und aus Gerätschaften, die zwischen diesem Behälter und dem Zirkulationsweg angeordnet sind, wenn das Melken beendet wird.

2. Anordnung zur Membranfiltration von Milch in Verbindung mit dem Melken, mit einem Behälter (1), einem Ausgleichstank (6) zum Aufnehmen von Milch von dem Behälter, Pumpen (3, 7) zum Transportieren der Milch vom Behälter und dem Ausgleichstank, einem Zirkulationsweg mit einer Zirkulationspumpe (9) und einem Membranfilter (10), und mit Rohrleitungen (11, 14) für Konzentrat und Permeat, gekennzeichnet durch eine Rohrleitung (16) zum Zurückführen von Permeat zu dem Behälter (1) und durch Mittel zum Kontrollieren der Pumpen (3, 7, 9).

**Revendications**

1. Procédé de filtration par membrane de lait dans le cadre de la traite, dans lequel le lait est transporté de la traite vers un récipient et est dirigé depuis ce récipient en passant par un réservoir d'équilibrage vers un parcours de circulation comprenant le filtre à membrane, caractérisé en ce que le perméat provenant de la filtration par membrane est renvoyé vers ledit récipient pour déplacer le lait du récipient et de l'équipement monté entre ce récipient et le parcours de circulation quand la traite est terminée.

2. Agencement de filtration par membrane de lait dans le cadre de la traite, comprenant un récipient (1), un réservoir d'équilibrage (6) pour recevoir le lait provenant des pompes de récipient (3, 7) pour transporter le lait du récipient et du réservoir d'équilibrage, un parcours de circulation comprenant une pompe de circulation (9) et un filtre à membrane (10), et des tuyauteries (11, 14) pour le concentré et le perméat, caractérisé par une tuyauterie (16) qui renvoie le perméat vers le récipient (1) et par des moyens pour commander les pompes (3, 7, 9).